# FASCICULE DE BREVET EUROPEEN

(11) **EP 2 646 737 B1**
(45) Date de publication et mention de la délivrance du brevet: **02.03.2016**
(21) Numéro de dépôt: 11785742.5
(22) Date de dépôt: 21.10.2011
(51) Int. Cl.: F17C 3/02

(54) **BARRIERE D'ETANCHEITE POUR UNE PAROI DE CUVE**
ABDICHTUNGSBARRIERE FÜR EINE GEFÄSSWAND
SEALING BARRIER FOR A VESSEL WALL

(30) Priorité: 01.12.2010 FR 1059952
(43) Date de publication de la demande: 09.10.2013
(73) Titulaire: GAZTRANSPORT ET TECHNIGAZ S.A., 78470 St. Rémy Lès Chevreuse (FR)
(72) Inventeur: CANLER, Gery, F-78720 La Celle Les Bordes (FR); MANGE, Amaury, F-78180 Montigny Le Bretonneux (FR)
(74) Mandataire: Loyer & Abello
(86) Numéro de dépôt international: PCT/FR2011/052470
(87) Numéro de publication internationale: WO 2012/072906

(56) Documents cités:
- FR-A1- 2 398 961
- FR-A1- 2 724 623

## Description

L'invention se rapporte au domaine des cuves étanches et thermiquement isolantes, notamment pour le stockage ou le transport de liquides chauds ou froids, et en particulier à des cuves pour des gaz liquéfiés à basse température.

On connaît, par exemple d'après FR-A-2798358, FR-A-2709725 FR-A-2549575 ou FR-A-2398961, des cuves de stockage ou de transport pour des gaz liquéfiés à basse température dont la ou chaque barrière étanche, notamment une barrière étanche primaire en contact avec le produit contenu dans la cuve, est constituée de tôles métalliques minces qui sont reliées entre elles, de manière étanche, par des bords relevés définissant des soufflets déformables de part et d'autre d'une aile de soudure.

Pour réaliser les soudures étanches des tôles métalliques à bords relevés sur les ailes de soudure sur de grandes longueurs, des machines de soudage électriques peuvent être employées, par exemple comme décrit dans FR-A-2172837 ou FR-A-2140716. Une telle machine de soudage d'un poids relativement important se déplace le long de la ligne de soudage en étant maintenue plaquée contre les tôles dont elle réalise la soudure des bords relevés. Ce maintien est réalisé grâce à l'inclinaison de l'axe des galets d'entrainement de la machine vers l'avant de la machine dans son sens de progression. La machine de soudage est ainsi adaptée à réaliser les soudures sur toutes les parois de la cuve, y compris les parois verticales et le plafond, tout en restant constamment et fermement plaquée contre la couche de tôle métallique dont elle réalise la soudure des bords relevés.

Dans une cuve du type précité, il existe des zones où la progression de la machine de soudage réalisant des cordons de soudure entre les bords relevés des tôles et l'aile de soudure doit être interrompue, par exemple au niveau d'une extrémité d'une paroi à proximité d'un angle de la cuve. Il se pose alors le problème de réaliser la continuité de la membrane métallique dans une telle zone, sachant que la barrière étanche peut être soumise à des contraintes de tension élevées résultant, le cas échéant, de la contraction thermique, de la déformation de la structure porteuse à la mer et/ou des mouvements de la cargaison à la mer comme le clapotement.

Selon un mode de réalisation, l'invention fournit un procédé de fabrication d'une barrière d'étanchéité pour une paroi de cuve étanche et thermiquement isolante, notamment une paroi de fond de la cuve, comportant :
sur une barrière d'isolation thermique présentant une surface de support plane pour la barrière d'étanchéité, disposer une structure répétée comportant alternativement une bande de tôle et une aile de soudure allongée liée à la surface de support, de manière que l'aile de soudure s'étende parallèlement à la bande de tôle sur au moins une partie de la longueur de la bande de tôle et que des bords latéraux relevés de la bande de tôle soient disposés contre les ailes de soudure adjacentes,
souder de manière étanche le bord latéral relevé à l'aile de soudure par un cordon de soudure rectiligne parallèle à la surface de support le long d'une première portion longitudinale de la bande de tôle,
prolonger le cordon de soudure rectiligne par une portion d'extrémité du cordon de soudure qui est déviée en direction d'une arête supérieure du bord latéral relevé et qui rejoint l'arête supérieure du bord latéral relevé,
réaliser une soudure d'arête étanche entre l'arête supérieure du bord latéral relevé de la bande de tôle et l'arête supérieure du bord latéral relevé d'une bande de tôle adjacente le long d'une deuxième portion longitudinale de la bande de tôle, de manière que la soudure d'arête rejoigne de manière étanche la portion d'extrémité du cordon de soudure.

Des modes de réalisation de ce procédé peuvent comporter une ou plusieurs des caractéristiques ci-dessous.

Selon un mode de réalisation, le cordon de soudure rectiligne est réalisé à l'aide d'une machine de soudage se déplaçant en appui sur les deux bandes de tôle adjacentes le long des bords latéraux relevés, la machine de soudage présentant des molettes de soudage rotatives et des galets d'entrainement aptes serrer les bords latéraux relevés, les galets d'entrainement ayant leurs axes inclinés vers l'avant de la machine dans son sens de progression par rapport à la direction perpendiculaire aux bandes de tôles.

Selon un mode de réalisation, la portion d'extrémité du cordon de soudure est réalisée en déviant la trajectoire de la machine de soudage en direction de l'arête supérieure des bords latéraux relevés.

Selon un mode de réalisation, on fait rouler la machine de soudage sur un plan incliné disposé sur les bandes de tôle pour dévier sa trajectoire en direction de l'arête supérieure des bords latéraux relevés.

Selon un mode de réalisation, la portion d'extrémité du cordon de soudure est réalisée en déviant un organe de soudage par rapport à un bâti de la machine de soudage en direction de l'arête supérieure des bords latéraux relevés. Pour cela, on emploie une machine de soudage dans laquelle la torche de soudage est montée mobile par rapport au bâti de la machine, par exemple sur un pivot d'axe transverse à la direction de déplacement de la machine ou sur une glissière perpendiculaire à la paroi de cuve. Un tel mode de réalisation du procédé permet de réaliser la portion d'extrémité déviée sans décrocher la machine des bords relevés de la membrane métallique, ce qui est assurément préférable lorsqu'on réalise la soudure sur une paroi verticale ou une paroi de plafond de la cuve.

Selon un mode de réalisation, on dispose une plaque de protection au-dessus de l'arête supérieure des bords latéraux relevés pour maintenir un espacement entre des électrodes de la machine de soudage lorsque lesdites électrodes atteignent l'arête supérieure au niveau de la portion d'extrémité du cordon de soudure. Une telle plaque de protection peut présenter une épaisseur sensiblement égale à l'épaisseur totale des deux bords latéraux relevés adjacents et de l'aile de soudure intercalée entre eux.

Selon un mode de réalisation, on arrête la portion d'extrémité du cordon de soudure en-dessous l'arête supérieure des bords latéraux relevés, puis on élimine une portion supérieure des bords latéraux relevés située au-dessus de la partie la plus haute du cordon de soudure.

Selon un mode de réalisation, on élimine la portion supérieure des bords latéraux relevés par une découpe locale de la bande de tôle, de sorte que la partie la plus haute du cordon de soudure se trouve sensiblement au fond de la découpe locale. Une telle découpe locale peut être de forme arrondie.

Selon un mode de réalisation, on élimine la portion supérieure des bords latéraux relevés le long de la deuxième portion longitudinale de la bande de tôle.

Selon un mode de réalisation, la portion d'extrémité du cordon de soudure est réalisée avant une extrémité longitudinale de l'aile de soudure et on élimine une portion supérieure de l'aile de soudure dépassant l'arête supérieure des bords latéraux relevés après réalisation de la portion d'extrémité du cordon de soudure, la portion supérieure de l'aile de soudure étant éliminée sur une longueur située entre la portion d'extrémité du cordon de soudure et l'extrémité longitudinale de l'aile de soudure.

Selon un mode de réalisation, on dispose une plaque de protection respective de part et d'autre de l'aile de soudure au-dessus de l'arête supérieure des bords relevés pour maintenir un espacement entre des électrodes de la machine de soudage lorsque lesdits électrodes atteignent l'arête supérieure au niveau de la portion d'extrémité du cordon de soudure. Par exemple, chaque plaque de protection peut présenter une épaisseur sensiblement égale à l'épaisseur d'un bord relevé de la bande de tôle.

Selon un mode de réalisation, l'invention fournit aussi une cuve étanche et thermiquement isolante disposée dans une structure porteuse comportant au moins une paroi porteuse, la cuve comportant au moins une paroi de cuve disposée le long de la ou de chaque paroi porteuse, la paroi de cuve comportant une barrière d'étanchéité et une barrière d'isolation thermique disposée entre la barrière d'étanchéité et la paroi porteuse, la barrière d'isolation thermique présentant une surface de support plane pour la barrière d'étanchéité,
la barrière d'étanchéité présentant une structure répétée comportant alternativement des bandes de tôle disposées sur la surface de support et des ailes de soudure allongées liées à la surface de support et s'étendant parallèlement aux bandes de tôle sur au moins une partie de la longueur des bandes de tôle, les bandes de tôle comportant des bords latéraux relevés disposés contre les ailes de soudure adjacentes,
au moins une desdites bandes de tôle comportant :
une première portion longitudinale dans laquelle le bord latéral relevé est soudé de manière étanche à l'aile de soudure par un cordon de soudure rectiligne parallèle à la surface de support,
une deuxième portion longitudinale dans laquelle le bord latéral relevé est soudé de manière étanche au bord latéral relevé d'une bande de tôle adjacente par une soudure d'arête, et
une portion intermédiaire dans laquelle la soudure d'arête de la deuxième portion et le cordon de soudure rectiligne de la première portion sont raccordés de manière étanche, le cordon de soudure présentant une portion d'extrémité déviée en direction de l'arête supérieure et rejoignant l'arête supérieure du bord relevé dans la portion intermédiaire de la bande de tôle, la soudure d'arête étant prolongée dans la portion intermédiaire de manière à réaliser une jonction étanche avec la portion d'extrémité du cordon de soudure.

Selon un mode de réalisation, une arête supérieure du bord latéral relevé de la bande de tôle est rectiligne et parallèle à la surface de support dans la portion intermédiaire de la bande de tôle.

Selon un mode de réalisation, une hauteur nominale du bord latéral relevé dans la deuxième portion longitudinale est égale à une hauteur du bord latéral relevé dans la première portion longitudinale.

Selon un autre mode de réalisation, la hauteur nominale du bord latéral relevé dans la deuxième portion longitudinale est inférieure à la hauteur du bord latéral relevé dans la première portion.

Selon un mode de réalisation, le bord latéral relevé présente une découpe dans la portion intermédiaire de la bande de tôle pour abaisser l'arête supérieure du bord relevé, la jonction de la soudure d'arête avec la portion d'extrémité déviée du cordon de soudure étant réalisée au fond de la découpe.

Selon un mode de réalisation, convenant par exemple pour la réalisation d'une structure d'angle de la cuve, la cuve comporte en outre une armature de retenue disposée le long d'un bord de la paroi porteuse et liée à la structure porteuse pour reprendre des efforts de traction, l'armature de retenue comportant un élément de liaison plan disposé dans une zone marginale de la paroi de cuve à distance de la paroi porteuse pour laisser passer la barrière d'isolation thermique entre l'élément de liaison plan et la paroi porteuse, la bande de tôle comportant un bord d'extrémité longitudinal soudé à l'élément de liaison dans la zone marginale de la paroi de cuve, la deuxième portion longitudinale de la bande de tôle comportant une portion marginale s'étendant entre le bord d'extrémité longitudinal et une extrémité de l'aile de soudure, l'arête supérieure du bord latéral relevé dans la portion marginale de la bande de tôle s'élevant progressivement à partir du bord d'extrémité longitudinal jusqu'à une hauteur nominale de la deuxième portion longitudinale.

Selon un mode de réalisation, la bande de tôle et l'aile de soudure sont en invar.

Une telle cuve peut faire partie d'une installation de stockage terrestre, par exemple pour stocker du GNL ou être installée dans une structure flottante, côtière ou en eau profonde, notamment un navire méthanier, une unité flottante de stockage et de regazéification (FSRU), une unité flottante de production et de stockage déporté (FPSO) et autres.

Selon un mode de réalisation, un navire pour le transport d'un produit liquide froid comporte une double coque et une cuve précitée disposée dans la double coque.

Selon un mode de réalisation, l'invention fournit aussi un procédé de chargement ou déchargement d'un tel navire, dans lequel on achemine un produit liquide froid à travers des canalisations isolées depuis ou vers une installation de stockage flottante ou terrestre vers ou depuis la cuve du navire.

Selon un mode de réalisation, l'invention fournit aussi un système de transfert pour un produit liquide froid, le système comportant le navire précité, des canalisations isolées agencées de manière à relier la cuve installée dans la coque du navire à une installation de stockage flottante ou terrestre et une pompe pour entrainer un flux de produit liquide froid à travers les canalisations isolées depuis ou vers l'installation de stockage flottante ou terrestre vers ou depuis la cuve du navire.

Une idée à la base de l'invention est de réaliser ou rétablir l'étanchéité d'une membrane en tôles à bords latéraux relevés entre, d'une part une zone où un cordon de soudure peut être réalisé par une machine progressant parallèlement à la surface de support de la barrière étanche et, d'autre part, une zone où une soudure étanche est réalisée sur l'arête des bords relevés. Une autre idée à la base de l'invention est de réaliser cette étanchéité en préservant la solidité et la durabilité de la membrane métallique. Certains aspects de l'invention partent de l'idée de forcer une machine de soudage à suivre une trajectoire qu'elle avait été conçue pour éviter.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

### Sur ces dessins :

- La figure 1 est une vue partielle en perspective écorchée d'une paroi de cuve étanche et thermiquement isolée dans laquelle des modes de réalisation de l'invention peuvent être employés.
- La figure 2 est une vue plane d'un détail d'une membrane étanche de la paroi de cuve de la figure 1 selon la ligne II-II.
- La figure 3 représente des étapes successives d'un procédé de fabrication d'une membrane étanche selon un premier mode de réalisation.
- Les figures 4 et 5 représentent des variantes du procédé de la figure 3.
- La figure 6 représente des étapes successives d'un procédé de fabrication d'une membrane étanche selon un deuxième mode de réalisation.
- La figure 7 représente des étapes successives d'un procédé de fabrication d'une membrane étanche selon un troisième mode de réalisation.
- La figure 8 est une vue partielle en perspective d'une zone d'extrémité d'une membrane étanche de la figure 1.
- La figure 9 est une vue partielle en perspective d'une zone centrale d'une membrane étanche.
- La figure 10 est une représentation schématique écorchée d'une cuve étanche et thermiquement isolante d'un navire méthanier et d'un terminal de chargement/déchargement de cette cuve.

Dans la description ci-dessous, on fait référence à une barrière d'étanchéité présentant une structure répétée comportant alternativement des bandes de tôle disposées sur la surface de support et des ailes de soudure allongées liées à la surface de support et s'étendant parallèlement aux bandes de tôle sur au moins une partie de la longueur des bandes de tôle, les bandes de tôle comportant des bords latéraux relevés disposés contre les ailes de soudure adjacentes.

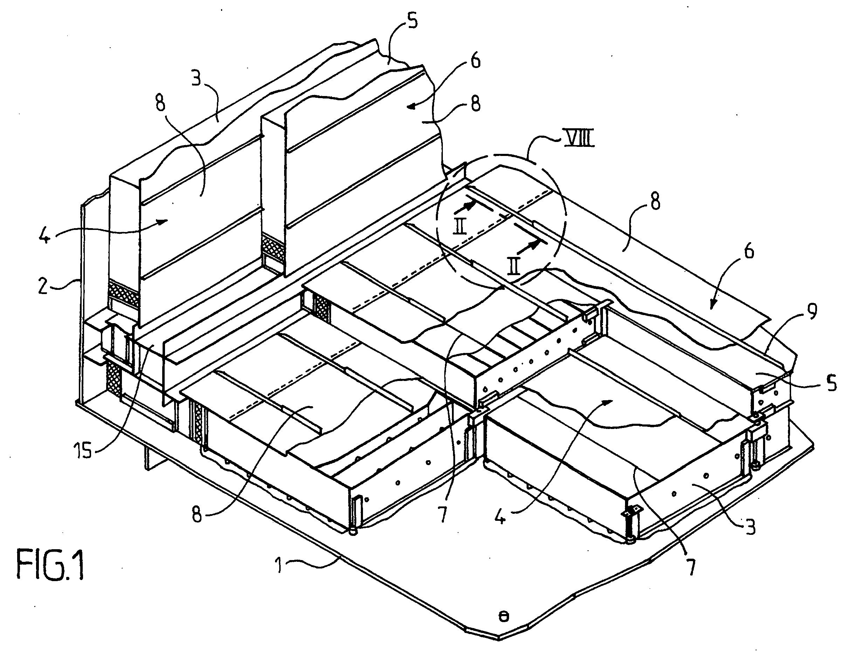

Une telle structure est par exemple utilisée dans les cuves de méthanier de type NO96 commercialisées par la déposante. La figure 1 est une vue schématique en perspective écorchée des parois étanches et isolantes d'une telle cuve, au niveau d'un angle entre une paroi de fond et une paroi transversale.

La structure porteuse de la cuve est ici constituée par la coque interne d'un navire à double coque, dont on a représenté la paroi de fond au chiffre 1, et par des cloisons transversales 2, qui définissent des compartiments dans la coque interne du navire. Sur chaque paroi de la structure porteuse, une paroi correspondante de la cuve est réalisée par superposition de, successivement, une couche d'isolation secondaire 3, une barrière étanche secondaire 4, une couche d'isolation primaire 5 et une barrière étanche primaire 6. Au niveau de l'angle entre les deux parois, les barrières étanches secondaires 4 des deux parois et les barrières étanches primaires 6 des deux parois sont reliées par un anneau de raccordement 15 sous la forme d'un tube carré qui permet de reprendre les efforts de tension résultant de la contraction thermique, de la déformation de la coque à la mer et des mouvements de la cargaison. Une structure possible de l'anneau de raccordement 15 est décrite plus en détails dans FR-A-2549575.

Les barrières étanches secondaires 4 et primaires 6 sont à chaque fois constituées d'une série de virures en invar parallèles à bords relevés 8, qui sont disposées alternativement avec des supports de soudure allongés 9, également en invar. Les supports de soudure 9 sont retenus à chaque fois à la couche d'isolation sous-jacente, par exemple en étant logés dans des rainures 7 ménagées dans les plateaux de couvercles de boîtes remplies de matière isolante. Cette structure alternée est réalisée sur toute la surface des parois, ce qui peut impliquer de très grandes longueurs. Sur ces grandes longueurs, les soudures étanches entre les bords relevés des virures et les supports de soudure intercalés entre eux peuvent être réalisées sous la forme de cordons de soudure rectilignes parallèles à la paroi grâce à la machine de soudage décrite dans l'introduction.

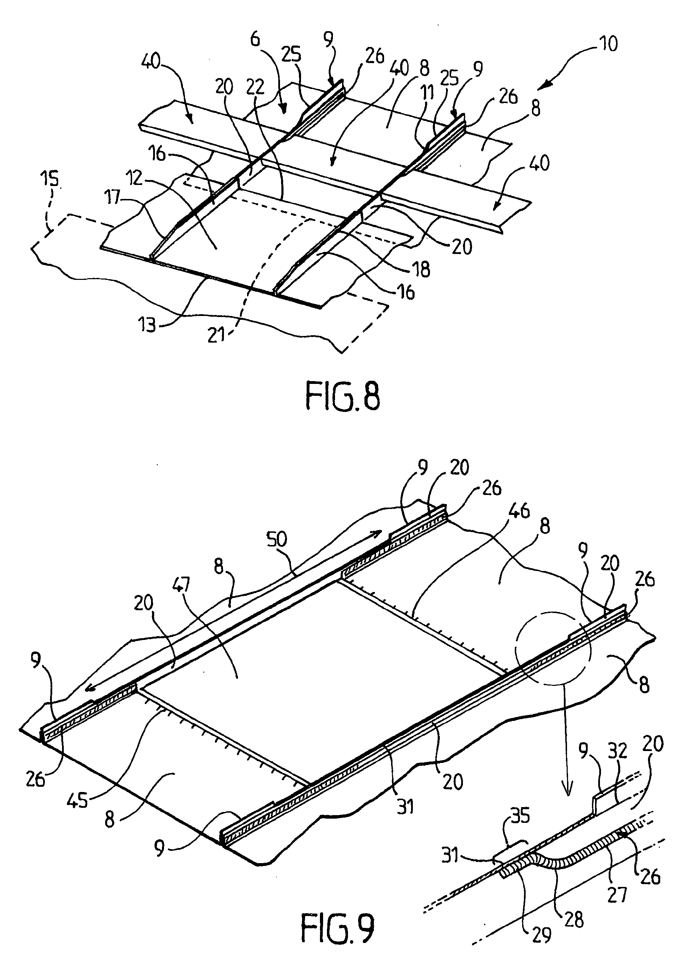

Dans la paroi de fond de la cuve, la portion d'extrémité des barrières étanches secondaire 4 et primaire 6 au voisinage de l'angle est réalisée différemment de la portion centrale. Cette portion d'extrémité 10 est mieux visible sur la figure 8, qui représente la barrière étanche primaire 6 seule par mesure de simplicité.

Les virures à bords relevés 8 ne sont pas raccordées directement à l'anneau de raccordement 15. Une série de fourrures en invar 12 est intercalée entre eux. Une fourrure 12 présente un bord d'extrémité 13 soudé continûment à une aile de l'anneau de raccordement 15 pour reprendre les efforts de tension. Les bords relevés 16 de la fourrure 12 présentent un profil complexe comportant une portion inclinée 17 qui s'élève progressivement depuis le bord 13 en direction des virures 8, puis une portion horizontale 18 dont la hauteur est égale à la hauteur des bords relevés 20 des virures 8. Les fourrures 12 sont soudées bords à bords de manière continue et étanche au niveau de l'arête supérieure des bords relevés 16. Cette soudure d'arête peut être réalisée de manière manuelle par un procédé de soudage à l'arc avec une électrode non fusible TIG.

Le raccordement des fourrures 12 avec les virures 8 est effectué au niveau d'une zone de recouvrement 21, dans laquelle le bord 22 des fourrures opposé au bord 13 est soudé de manière continue et étanche sur les virures, tandis que les bords relevés 16 des fourrures viennent envelopper les extrémités de bords relevés 20 des virures. La soudure étanche au niveau des arêtes des fourrures 12 est prolongée dans cette zone puis au niveau de l'arête supérieure des bords relevés 20 des virures 8 en direction du support de soudure 9.

Le support de soudure 9 intercalé entre deux virures 8 se termine au niveau de la zone de recouvrement 21 ou légèrement avant celle-ci. Toutefois, à partir d'un point d'extrémité 11, la portion supérieure 25 de ce support est arasée pour que la hauteur du support de soudure 9 soit la même que la hauteur des bords relevés 20, ce qui facilite la réalisation d'une soudure d'arête étanche entre eux.

Tout au long de la portion centrale de la paroi de cuve, et jusqu'à proximité de la zone d'extrémité 10, la liaison étanche entre les bords relevés 20 des virures 8 et les supports de soudure 9 est réalisée par des cordons de soudures rectilignes 26, qui s'étendent à peu près à mi-hauteur des bords relevés 20 de part et d'autre du support de soudure 9. Ces cordons de soudure 26 s'étendent strictement parallèlement à la surface de support sur laquelle la barrière d'étanchéité repose, car la machine de soudage qui les réalise progresse en roulant sur cette surface et en étant fermement appliquée contre celle-ci. Toutefois, faute d'un espace suffisant, la machine de soudage à molettes doit être arrêtée avant d'atteindre l'angle de la cuve. Il faut donc établir une liaison étanche entre la portion d'extrémité du cordon de soudure 26 situé du côté du centre de la cuve, et la soudure d'arête réalisée au niveau des fourrures 12 et de la zone de recouvrement 21.

Pour cela, une technique possible est de découper localement les bords relevés 20 des virures 8 au droit de l'extrémité du cordon de soudure 26, pour abaisser leur arête supérieure jusqu'à rencontrer le cordon de soudure 26. Il est alors possible de prolonger la soudure d'arête dans le fond de cette découpe jusqu'à rejoindre continûment le cordon de soudure 26. Toutefois, étant donné que le cordon de soudure 26 est réalisé à peu près à mi-hauteur des bords relevés 20, cette découpe locale constitue une zone d'affaiblissement notable des bords relevés 20 des virures 8 susceptible de concentrer les contraintes et de rompre par fatigue de manière prématurée.

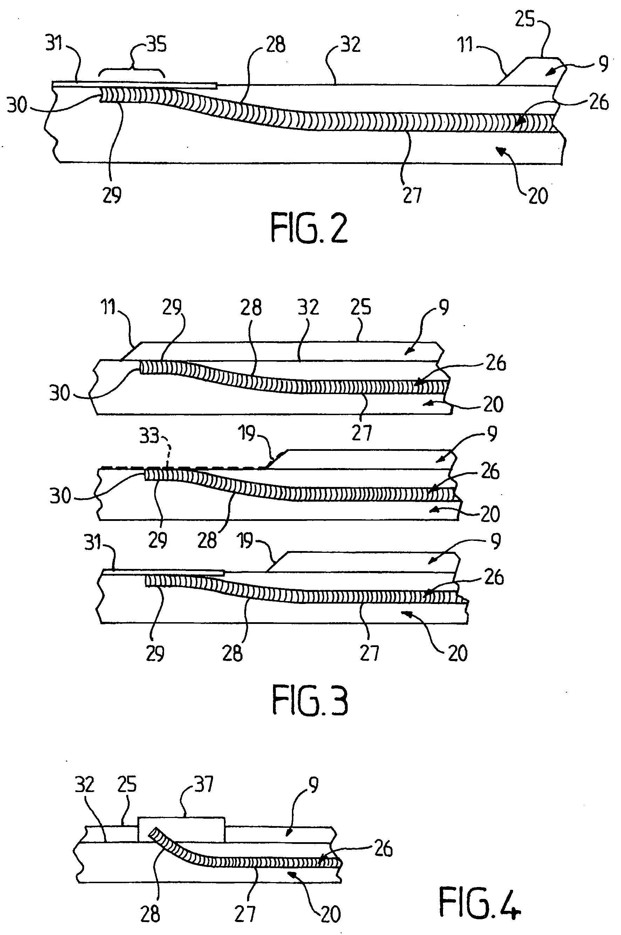

Une technique préférée est représentée sur la figure 2. Les mêmes chiffres sont utilisés pour désigner les mêmes éléments que sur les figures 1 et 8. La fin du cordon de soudure 26 est ici réalisée avec une portion rectiligne 27 qui prolonge le cordon réalisé dans la partie centrale de la cuve, puis une portion déviée 28 qui s'élève par rapport à la surface de support jusqu'à rejoindre ou affleurer l'arête supérieure 32 des bords relevés 20, puis une portion rectiligne finale 29 qui se termine au point 30. La soudure d'arête 31 peut alors être prolongée depuis la zone de recouvrement 21 jusqu'à la portion 29 du cordon de soudure, pour réaliser une jonction étanche dans la zone 35.

Pour réaliser la portion déviée 28 et la portion finale 29, une technique possible est de disposer un plan incliné 40 sur les virures 8 de part et d'autre des bords relevés 20, comme représenté sur la figure 8, pour faire progresser la machine de soudage sur ces plans inclinés. Les plans inclinés 40 présentent un profil similaire aux portions 28 et 29 du cordon de soudure à obtenir.

La figure 3 illustre un premier mode de réalisation d'un procédé pour réaliser la jonction étanche des virures au niveau de la portion d'extrémité 10 de la barrière étanche.

Dans une première étape, le cordon de soudure 26 avec les portions 27, 28 et 29 est réalisé à la machine comme décrit précédemment, dans une zone où la portion supérieure 25 du support de soudure 9 est présente. La présence du support de soudure 9 évite une mise en court-circuit des électrodes de soudage de la machine lorsqu'elles atteignent l'arête supérieure 32 des bords relevés 20. Dans une deuxième étape, la portion supérieure 25 du support de soudure est arasée au droit des portions 28 et 29 du cordon de soudure, comme indiqué par la ligne 33. Le point d'extrémité de la portion supérieure 25 passe donc de la position indiquée au chiffre 11 à la position indiquée au 19. Dans une troisième étape, la soudure d'arête 31 est prolongée jusqu'à rencontrer la portion finale 29 du cordon de soudure.

La figure 4 représente une variante de ce procédé, dans laquelle la première étape emploie deux plaques métalliques de protection 37 de part et d'autre du support de soudure 9 pour permettre une course plus longue des molettes de soudage au-delà de la hauteur du support de soudure 9 sans risque de court-circuit, lorsque la machine se dégage des bords relevés 20 en fin de progression. Les autres étapes sont inchangées. L'épaisseur de la plaque 37 peut être celle d'une virure 8.

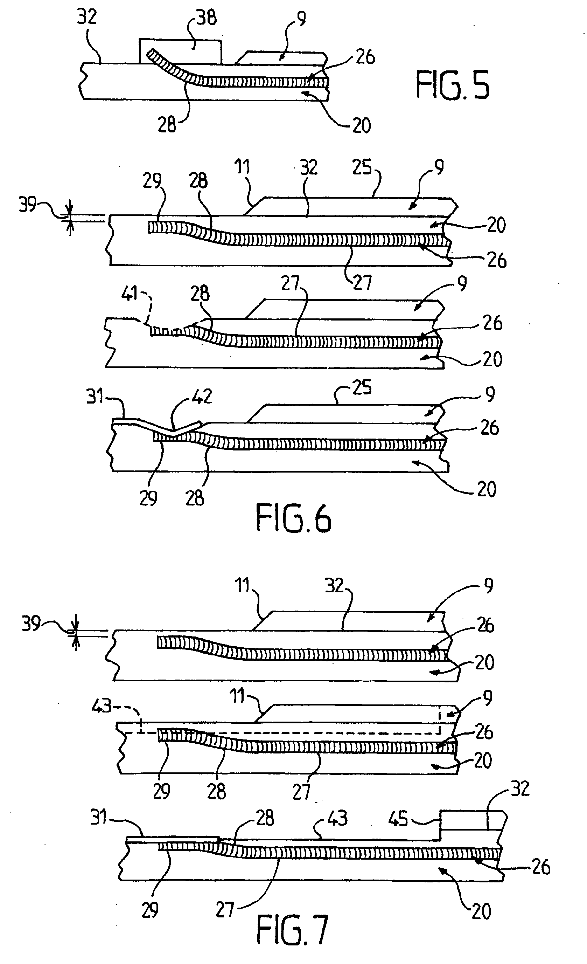

La figure 5 représente une autre variante de ce procédé, dans laquelle la première étape est réalisée dans une zone où le support de soudure 9 est absent ou a déjà été arasé. Une plaque de protection 38 placée au-dessus de l'arête supérieure 32 des bords relevés 20 protège les électrodes de soudage de la mise en court-circuit à la fin de la réalisation de la portion déviée 28. L'épaisseur de la plaque 38 peut être l'épaisseur cumulée du support de soudure 9 et de deux virures 20.

La figure 6 illustre un deuxième mode de réalisation d'un procédé pour réaliser la jonction étanche des virures au niveau de la portion d'extrémité 10 de la barrière étanche.

Dans une première étape, le cordon de soudure avec les portions 27, 28 et 29 est réalisé à la machine comme décrit précédemment. La portion déviée 28 est ici réalisée après le point d'extrémité 11 de la portion supérieure 25 du support de soudure 9. En variante, la portion déviée 28 pourrait aussi être réalisée à un endroit où la portion supérieure 25 est présente comme sur la figure 3 et arasée ensuite. La portion finale 29 du cordon de soudure 26 est réalisée en dessous de l'arête supérieure 32 des bords relevés 20, avec un écart 39 par rapport à celle-ci. Cet écart 39 permet d'assurer que les molettes de la machine de soudage restent engagées sur le bord relevé 20 lors de la réalisation de la portion 29, ce qui évite leur mise en court-circuit.

Dans une deuxième étape, une découpe arrondie 41 est pratiquée dans le haut du support de soudure, pour abaisser localement l'arête supérieure 32 jusqu'à rencontrer la portion finale 29 du cordon de soudure 26. Dans une troisième étape, la soudure d'arête 31 est prolongée jusqu'à rencontrer la portion 29 du cordon de soudure 26 au niveau du fond 42 de la découpe arrondie 41. La découpe 41 présente de préférence une petite profondeur qui n'excède pas ¼ de la hauteur des bords relevés 20 pour ne pas affaiblir trop significativement les bords relevés 20.

La figure 7 illustre un troisième mode de réalisation d'un procédé pour réaliser la jonction étanche des virures au niveau de la portion d'extrémité 10 de la barrière étanche. La première étape est identique à celle du procédé de la figure 6. Dans la deuxième étape, la partie supérieure des bords relevés 20 est arasée sur une hauteur légèrement supérieure à l'écart 39 afin de rencontrer la portion finale 29 du cordon de soudure 26, et sur une longueur qui s'étend depuis la zone de recouvrement 21 entre les virures 8 et les fourrures 12 et jusqu'à un bord de coupe 45 situé au-delà de la portion déviée 28 du cordon de soudure, comme indiqué par la ligne 43. La ligne 43 désigne donc la nouvelle position de l'arête supérieure des bords relevés 20, sur laquelle la soudure d'arête 31 est réalisée jusqu'à rejoindre de manière étanche la portion finale 29 du cordon de soudure 26.

Les procédés des figures 3 et 7 permettent notamment de réaliser la jonction étanche entre la soudure d'arête 31 et le cordon de soudure 26 dans une zone plane des bords relevés 20, dont la géométrie n'est donc pas de nature à concentrer les contraintes.

Ces procédés peuvent être employés pour fabriquer les membranes étanches primaires et/ou secondaires au niveau des angles de la cuve, mais aussi pour réaliser des réparations. Des réparations nécessitant de joindre de manière étanche une soudure d'arête manuelle avec un cordon de soudure réalisé à la machine peuvent aussi être réalisées dans différents emplacements de la cuve, notamment dans la partie centrale de la paroi de fond. Un exemple d'une telle réparation va maintenant être décrit en référence la figure 9.

La figure 9 représente une portion de la membrane primaire 6 de la cuve de la figure 1, dans une zone centrale de la paroi de fond. Les mêmes chiffres de référence désignent les mêmes éléments. On suppose que la virure 8 au centre de la figure a été endommagée dans une zone localisée. Pour effectuer la réparation de la membrane dans cette zone, plusieurs opérations sont nécessaires :
- Araser la portion supérieure des supports de soudure 9 et des bords relevés 20 sur une zone de réparation 50, par exemple de l'ordre de 50 cm. La zone de réparation 50 englobe la partie de virure à réparer et dépasse de chaque côté de celle-ci.
- Découper la virure 8 au niveau de deux lignes transversales et de deux lignes longitudinales situées au niveau du pli des bords relevés pour retirer la portion endommagée,
- Placer une nouvelle portion de virure 47 de taille supérieure à la portion retirée pour obtenir un recouvrement longitudinal avec les virures restées en place au niveau des extrémités 45 et 46,
- Souder de manière étanche la nouvelle portion de virure 47 aux virures restées en place au niveau des extrémités 45 et 46,
- Placer les bords relevés 20 de la nouvelle portion de virure 47 contre les supports de soudure 9 et effectuer un cordon de soudure étanche 31 sur leur arête supérieure tout le long de la zone de réparation 50,
- Et effectuer un raccordement étanche entre les soudures d'arête 31 et le cordon de soudure 26 des virures 8 restées en place. Pour cela, comme montré sur le détail agrandi de la figure 9, on peut faire repasser la machine de soudure sur le cordon 26 préexistant et décaler sa trajectoire, par exemple avec un plan incliné, pour réaliser une portion déviée 28 qui rejoigne la soudure d'arête 31. De préférence, une portion finale 29 du cordon de soudure est réalisée sensiblement parallèlement à l'arête supérieure 32 des bords relevés 20 pour fournir une zone de recouvrement 35 étendue avec la soudure d'arête 31.

Dans une variante de réalisation, au lieu d'employer les plans inclinés 40, on réalise la portion déviée 28 du cordon de soudure 26 en déviant brutalement la course de la machine de soudage, par exemple en appliquant un choc, de manière à faire sortir la machine par le haut des bords relevés 20.

Les termes « haut », « bas », « supérieur » et « inférieur » ont été employés ci-dessus pour décrire une membrane située sur la paroi de fond de la cuve. Toutefois, des membranes peuvent être réalisées ou réparées de manière similaire sur les autres parois de la cuve, notamment parois latérales et paroi de plafond. Les termes « haut », « bas », « supérieur » et « inférieur » doivent donc être compris par référence à la position de la paroi et non nécessairement par rapport au champ de gravitation terrestre.

Les techniques décrites ci-dessus pour réaliser une membrane d'étanchéité peuvent être utilisée dans différents types de réservoirs, par exemple pour constituer la membrane d'étanchéité primaire et/ou la membrane d'étanchéité secondaire d'un réservoir de GNL dans une installation terrestre ou dans un ouvrage flottant comme un navire méthanier ou autre.

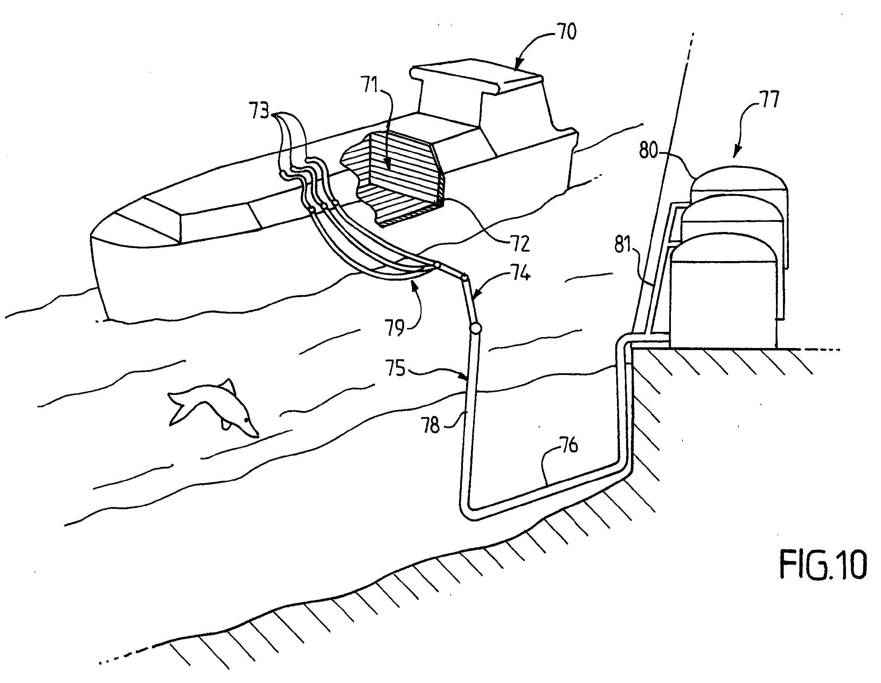

En référence à la figure 10, une vue écorchée d'un navire méthanier 70 montre une cuve étanche et isolée 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolantes agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 10 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en oeuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Procédé de fabrication d'une barrière d'étanchéité (6) pour une paroi de cuve étanche et thermiquement isolante, comportant :
sur une barrière d'isolation thermique (5) présentant une surface de support plane pour la barrière d'étanchéité, disposer une structure répétée comportant alternativement des bandes de tôle (8) et des ailes de soudure (9) allongées liées à la surface de support, saillantes par rapport à celle-ci, de manière que les ailes de soudure (9) s'étendent parallèlement aux bandes de tôle (8) sur au moins une partie de la longueur des bandes de tôle et que des bords latéraux (20) des bandes de tôle relevés par rapport à la surface de support soient disposés contre les ailes de soudure adjacentes,
pour respectivement une première et une deuxième bandes de tôles adjacentes disposées de part et d'autre d'une aile de soudure, souder de manière étanche le bord latéral relevé (20) de la bande de tôle à l'aile de soudure par un cordon de soudure rectiligne (26) parallèle à la surface de support le long d'une première portion longitudinale (27) de la bande de tôle, le cordon de soudure rectiligne (26) étant à chaque fois disposé en dessous d'une arête supérieure (32, 41, 43) du bord latéral relevé de la bande de tôle respective,
**caractérisé par** les étapes de :
prolonger à chaque fois le cordon de soudure rectiligne par une portion d'extrémité (28, 29) du cordon de soudure qui est déviée par rapport à la surface de support en direction de l'arête supérieure (32, 41, 43) du bord latéral relevé et qui rejoint l'arête supérieure (32, 41, 43) du bord latéral relevé, et
réaliser une soudure d'arête étanche (31) entre l'arête supérieure du bord latéral relevé (20) de la première bande de tôle et l'arête supérieure du bord latéral relevé (20) de la deuxième bande de tôle adjacente le long d'une deuxième portion longitudinale des deux bandes de tôle, de manière que la soudure d'arête (31) rejoigne de manière étanche la portion d'extrémité (28, 29) du cordon de soudure (26) respectif de chacune des deux bandes de tôles.

2. Procédé selon revendication 1, dans lequel le cordon de soudure rectiligne est réalisé à l'aide d'une machine de soudage se déplaçant en appui sur les deux bandes de tôle adjacentes (8) le long des bords latéraux relevés (20), la machine de soudage présentant des molettes de soudage rotatives et des galets d'entrainement aptes serrer les bords latéraux relevés (20), les galets d'entrainement ayant leurs axes inclinés vers l'avant de la machine dans son sens de progression par rapport à la direction perpendiculaire aux bandes de tôles.

3. Procédé selon revendication 2, dans lequel la portion d'extrémité du cordon de soudure est réalisée en déviant la trajectoire de la machine de soudage en direction de l'arête supérieure (32, 41,43) des bords latéraux relevés.

4. Procédé selon revendication 3, dans lequel on fait rouler la machine de soudage sur un plan incliné (40) disposé sur les bandes de tôle pour dévier sa trajectoire en direction de l'arête supérieure des bords latéraux relevés.

5. Procédé selon l'une des revendications 2 à 4, dans lequel on dispose une plaque de protection (37, 38) au-dessus de l'arête supérieure des bords latéraux relevés pour maintenir un espacement entre des électrodes de la machine de soudage lorsque lesdites électrodes atteignent l'arête supérieure au niveau de la portion d'extrémité du cordon de soudure.

6. Procédé selon l'une des revendications 1 à 4, dans lequel on arrête la portion d'extrémité (28, 29) du cordon de soudure en-dessous l'arête supérieure (32) des bords latéraux relevés, puis on élimine une portion supérieure (41, 43) des bords latéraux relevés située au-dessus de la partie la plus haute du cordon de soudure.

7. Procédé selon revendication 6, dans lequel on élimine la portion supérieure des bords latéraux relevés par une découpe locale (41) de la bande de tôle, de sorte que la partie la plus haute du cordon de soudure se trouve sensiblement au fond de la découpe locale.

8. Procédé selon l'une des revendications 1 à 4, dans lequel la portion d'extrémité du cordon de soudure est réalisée avant une extrémité longitudinale (11) de l'aile de soudure (9) et dans lequel on élimine une portion supérieure (25, 33) de l'aile de soudure dépassant l'arête supérieure (32) des bords latéraux relevés après réalisation de la portion d'extrémité (28, 29) du cordon de soudure, la portion supérieure (25, 33) de l'aile de soudure étant éliminée sur une longueur située entre la portion d'extrémité (28, 29) du cordon de soudure et l'extrémité longitudinale (11) de l'aile de soudure.

9. Cuve étanche et thermiquement isolante disposée dans une structure porteuse comportant une paroi porteuse (1), la cuve comportant une paroi de cuve disposée le long de la paroi porteuse, la paroi de cuve comportant une barrière d'étanchéité (6) et une barrière d'isolation thermique disposée (5) entre la barrière d'étanchéité et la paroi porteuse, la barrière d'isolation thermique présentant une surface de support plane pour la barrière d'étanchéité,
la barrière d'étanchéité (6) présentant une structure répétée comportant alternativement des bandes de tôle (8) disposées sur la surface de support et des ailes de soudure (9) allongées liées à la surface de support, saillantes par rapport à celle-ci, et s'étendant parallèlement aux bandes de tôle sur au moins une partie de la longueur des bandes de tôle, les bandes de tôle comportant des bords latéraux (20) relevés par rapport à la surface de support disposés contre les ailes de soudure adjacentes,
chacune des deux bandes de tôle disposées de part et d'autre d'une aile de soudure comportant une première portion longitudinale dans laquelle le bord latéral relevé (20) de la bande de tôle respective est soudé de manière étanche à l'aile de soudure (9) par un cordon de soudure rectiligne (26, 27) parallèle à la surface de support, le cordon de soudure rectiligne (26) étant à chaque fois disposé en dessous d'une arête supérieure (32, 41, 43) du bord latéral relevé de la bande de tôle respective,
carctérisée par le fait que chacune des deux bandes de tôle disposées de part et d'autre d'une aile de soudure comporte en outre :
une deuxième portion longitudinale dans laquelle le bord latéral relevé (20) est soudé de manière étanche au bord latéral relevé (20) de l'autre bande de tôle adjacente par une soudure d'arête (31), et
une portion intermédiaire dans laquelle la soudure d'arête (31) de la deuxième portion et le cordon de soudure rectiligne (26, 27) de la première portion sont raccordés de manière étanche, le cordon de soudure présentant à chaque fois une portion d'extrémité (28, 29) déviée par rapport à la surface de support en direction de l'arête supérieure (32, 41, 43) et rejoignant l'arête supérieure (32, 41, 43) du bord relevé (20) dans la portion intermédiaire de la bande de tôle respective, la soudure d'arête (31) étant prolongée dans la portion intermédiaire de chacune des deux bandes de tôles de manière à réaliser une jonction étanche avec la portion d'extrémité (28, 29) du cordon de soudure respectif de chacune des deux bandes de tôles.

10. Cuve selon la revendication 9, dans laquelle l'arête supérieure (32, 43) du bord latéral relevé (20) de la bande de tôle est rectiligne et parallèle à la surface de support dans la portion intermédiaire de la bande de tôle.

11. Cuve selon la revendication 9 ou 10, dans laquelle une hauteur nominale (32) du bord latéral relevé (20) dans la deuxième portion longitudinale est égale à une hauteur du bord latéral relevé (20) dans la première portion longitudinale.

12. Cuve selon la revendication 9 ou 10, dans laquelle la hauteur nominale (43) du bord latéral relevé (20) dans la deuxième portion longitudinale est inférieure à la hauteur du bord latéral relevé (20) dans la première portion.

13. Cuve selon la revendication 9, dans laquelle le bord latéral relevé présente une découpe (41) dans la portion intermédiaire de la bande de tôle pour abaisser l'arête supérieure du bord relevé, la jonction de la soudure d'arête avec la portion d'extrémité déviée du cordon de soudure étant réalisée au fond (42) de la découpe.

14. Cuve selon l'une des revendications 9 à 13, dans laquelle la cuve comporte en outre une armature de retenue (15) disposée le long d'un bord de la paroi porteuse (1) et liée à la structure porteuse pour reprendre des efforts de traction, l'armature de retenue comportant un élément de liaison plan (15) disposé dans une zone marginale de la paroi de cuve à distance de la paroi porteuse pour laisser passer la barrière d'isolation thermique (5) entre l'élément de liaison plan et la paroi porteuse (1), la bande de tôle (12) comportant un bord d'extrémité longitudinal (13) soudé à l'élément de liaison dans la zone marginale (10) de la paroi de cuve, la deuxième portion longitudinale de la bande de tôle comportant une portion marginale (12) s'étendant entre le bord d'extrémité longitudinal (13) et une extrémité de l'aile de soudure (9), l'arête supérieure (17) du bord latéral relevé (16) dans la portion marginale de la bande de tôle (12) s'élevant progressivement à partir du bord d'extrémité longitudinal jusqu'à une hauteur nominale (32, 43) de la deuxième portion longitudinale.

15. Navire (70) pour le transport d'un produit liquide froid, le navire comportant une double coque (72) et une cuve (71) selon l'une des revendications 9 à 14 disposée dans la double coque.

16. Utilisation d'un navire (70) selon la revendication 15, dans laquelle on achemine un produit liquide froid à travers des canalisations isolées (73, 79, 76, 81) depuis ou vers une installation de stockage flottante ou terrestre (77) vers ou depuis la cuve du navire (71) pour réaliser le chargement ou le déchargement du navire (70).

17. Système de transfert pour un produit liquide froid, le système comportant un navire (70) selon la revendication 15, des canalisations isolées (73, 79, 76, 81) agencées de manière à relier la cuve (71) installée dans la coque du navire à une installation de stockage flottante ou terrestre (77) et une pompe pour entrainer un flux de produit liquide froid à travers les canalisations isolées depuis ou vers l'installation de stockage flottante ou terrestre vers ou depuis la cuve du navire.

## Patentansprüche

1. Verfahren zur Herstellung einer Abdichtungssperre (6) für eine dichte und wärmeisolierende Behälterwand, umfassend
auf einer wärmeisolierende Sperre (5) mit einer ebenen Auflagefläche für die Abdichtungssperre wird eine sich wiederholende Struktur, umfassend abwechselnd Blechstreifen (8) und längliche, mit der Auflagefläche verbundene, im Verhältnis zu dieser vorstehende Schweißflansche (9) angebracht, so dass sich die Schweißflansche (9) parallel zu den Blechstreifen (8) auf mindestens einem Teil der Länge der Blechstreifen erstrecken, wobei im Verhältnis zur Auflagefläche erhöhte Seitenränder (20) der Blechstreifen gegenüberliegend den angrenzenden Schweißflanschen angeordnet sind,
wobei jeweils ein erster und zweiter angrenzender Blechstreifen beiderseits eines Schweißflansches angeordnet wird; Verschweißen in abdichtender Form des erhöhten Seitenrandes (20) des Blechstreifens mit dem Schweißflansch mit einer gradlinigen Schweißnaht parallel zur Auflagefläche entlang eines ersten Längsabschnittes (27) des Blechstreifens, wobei die gradlinige Schweißnaht (26) jeweils unter einer Oberkante (32, 41, 43) des erhöhten Seitenrandes des jeweiligen Blechstreifens angeordnet wird,
**gekennzeichnet durch** die Schritte:
Verlängern jeweils der gradlinigen Schweißnaht **durch** einen Endabschnitt (28, 29) der Schweißnaht, welche im Verhältnis zur Auflagefläche in Richtung der Oberkante (32, 41, 43) des erhöhten Seitenrandes abgelenkt ist und die auf die Oberkante (32, 41, 43) des erhöhten seitlichen Randes trifft, und
Erzielen einer dichten Kantenschweißung (31) zwischen der Oberkante des erhöhten Seitenrandes (20) des ersten Blechstreifens und der Oberkante des erhöhten Seitenrandes (20) des zweiten Blechstreifens entlang eines zweiten Längsabschnittes der zwei Blechstreifen, so dass die Kantenschweißung (31) in dichtender Weise den Endabschnitt (28,29) der Schweißnaht (26) der jeweils zwei Blechstreifen trifft.

2. Verfahren gemäß Anspruch 1, wobei die gradlinige Schweißnaht mit Hilfe eines Schweißgerätes, welches sich auf dem angrenzenden Blechstreifen (8) entlang der erhöhten Seitenränder (20) bewegt, erzielt wird, wobei das Schweißgerät rotierende Rollnahtschweißköpfe und Antriebsrollen, welche dazu geeignet sind, die erhöhten seitlichen Ränder zusammen zu drücken, aufweist, wobei die Achsen der Antriebsrollen zur Vorderseite des Schweißgerätes in Bewegungsrichtung im Verhältnis zur senkrechten Richtung zu den Blechstreifen ausgerichtet sind.

3. Verfahren gemäß Anspruch 2, wobei der Endabschnitt der Schweißnaht dadurch erzielt wird, dass die Laufbahn des Schweißgerätes in Richtung der Oberkante der erhöhten Seitenränder umgeleitet wird.

4. Verfahren gemäß Anspruch 3, wobei sich das Schweißgerät auf einer geneigten, auf dem Blechstreifen angeordneten Ebene (40) bewegt, um seine Laufbahn in Richtung der Oberkante der erhöhten Seitenränder umzuleiten.

5. Verfahren gemäß einem der Ansprüche 2 bis 4, wobei eine Schutzplatte (37, 38) über der Oberkante der erhöhten Seitenränder angeordnet wird, um einen Abstand zwischen den Elektroden des Schweißgerätes zu erzielen, wenn die Elektroden die Oberkante in Höhe des Endabschnittes der Schweißnaht erreichen.

6. Verfahren gemäß einem der Ansprüche 1 bis 4, wobei der Endabschnitt (28, 29) der Schweißnaht unter der Oberkante (32) der erhöhten Seitenränder endet, und dann ein oberer Abschnitt (41,43) der erhöhten Seitenränder, welche unter dem höchsten Teil der Schweißnaht angesiedelt ist, entfernt wird.

7. Verfahren gemäß Anspruch 6, wobei der obere Abschnitt der erhöhten Seitenränder mittels einer lokalen Ausnehmung (41)des Blechstreifens entfernt wird, so dass der höchste Teil der Schweißnaht sich deutlich hinter der lokalen Ausnehmung befindet.

8. Verfahren gemäß einem der Ansprüche 1 bis 4, wobei der Endabschnitt der Schweißnaht vor einem Längsendpunkt (11) des Schweißflansches erzielt wird und wobei der obere Teil (25, 33) der Schweißflansch entfernt wird, der die Oberkante (32) der erhöhten Seitenränder nach Ausführung der Endabschnitte (28,29) der Schweißnaht übersteigt, wobei der obere Teil (25, 33) der Schweißflansch auf einer Länge zwischen dem Endabschnitt (28, 29) der Schweißnaht und dem Längsendpunkt (11) des Schweißflansch entfernt wird.

9. Dichter und wärmeisolierender Tank, angeordnet in einer lasttragenden Struktur, umfassend eine lasttragende Wand (1), wobei der Tank eine entlang der lasttragenden Struktur angeordnete Behälterwand umfasst, wobei die Behälterwand eine Abdichtungssperre (6) und eine wärmeisolierende Sperre, welche zwischen der Abdichtungssperre und der lasttragenden Struktur angeordnet ist (5), umfasst, wobei die wärmeisolierende Sperre eine ebene Auflagefläche für die Abdichtungssperre aufweist,
wobei die Abdichtungssperre (6) eine sich wiederholende Struktur aus abwechselnd auf der Auflagefläche angeordneten Blechstreifen (8) und länglichen, mit der Auflagefläche verbundenen, im Verhältnis zu dieser vorstehenden Schweißflansche (9) aufweist, welche sich auf mindestens einem Teil der Länge der Blechstreifen parallel zu den Blechstreifen erstrecken, wobei die Blechstreifen Seitenränder (29) umfassen, welche im Verhältnis zur Auflagefläche erhöht sind und gegen die angrenzenden Schweißflansche angeordnet sind,
wobei jeder der zwei Blechstreifen, beiderseits eines Schweißflansches angebracht, einen ersten Längsabschnitt, in dem der erhöhte Seitenrand (20) des jeweiligen Blechstreifens abdichtend mit der Schweißflansch (9) durch eine gradlinige Schweißnaht (26, 27) parallel zur Auflagefläche verschweißt ist, umfasst, wobei die gradlinige Schweißnaht (26) jeweils unter einer Oberkante (32, 41, 43) des erhöhten Seitenrandes des jeweiligen Blechstreifens angebracht ist,
**dadurch gekennzeichnet, dass** jeder der zwei Blechstreifen, angeordnet beiderseits der Schweißflansch, unter anderem umfasst:
einen zweiten Längsabschnitt, in dem der erhöhte Seitenrand (20) in abdichtender Weise mit dem erhöhten Seitenrand (20) des anderen, angrenzenden Blechstreifens durch eine Kantenschweißung verschweißt ist, und
einen Zwischenabschnitt, in welchem die Kantenschweißung (31) des zweiten Abschnitts und die gradlinige Schweißnaht (26,27) des ersten Abschnittes dicht miteinander verbunden sind, wobei die Schweißnaht jeweils einen, im Verhältnis zur Auflagefläche in Richtung der Oberkannte (32, 41, 43) abgelenkten Endabschnitt (28, 29) aufweist, und auf die Oberkante (32, 41, 43) des erhöhten Randes (20) in dem Zwischenabschnitt des Blechstreifens trifft, wobei die Kantenschweißung (31) in dem Zwischenabschnitt beider Blechstreifen ausgedehnt ist, so dass eine dichte Verbindung mit den Endabschnitten (28, 29) der jeweiligen Schweißnaht der zwei Blechstreifen entsteht.

10. Tank gemäß Anspruch 9, wobei die Oberkante (32, 43) des erhöhten Seitenrandes (20) des Blechstreifens im Zwischenabschnitt des Blechstreifens gradlinig und parallel zu der Auflagefläche ist.

11. Tank gemäß Anspruch 9 oder 10, wobei eine nominelle Höhe (32) des erhöhten Seitenrandes (20) in dem zweiten Längsabschnitt gleich ist zu einer Höhe des erhöhten Seitenrandes (20) in dem ersten Längsabschnitt.

12. Tank gemäß einem der Ansprüche 9 oder 10, wobei die nominelle Höhe (43) des erhöhten Seitenrandes (20) in dem zweiten Längsabschnitt niedriger ist als die Höhe des erhöhten Seitenrandes (20) in dem ersten Abschnitt.

13. Tank gemäß Anspruch 9, wobei der erhöhte Seitenrand in dem Zwischenabschnitt des Blechstreifens eine Ausnehmung (41) aufweist, um die Oberkante des erhöhten Randes abzusenken, wobei die Verbindung der Kantenschweißung mit dem abgelenkten Endabschnitt der Schweißnaht am Grund (42) der Ausnehmung erzielt wird.

14. Tank gemäß einem der Ansprüche 9 bis 13, wobei der Tank unter anderem eine Haltearmatur umfasst, welche entlang eines Randes der Trägerwand (1) angeordnet und mit der lasttragenden Struktur verbunden ist, um Zugkräfte aufnehmen zu können, wobei die Haltearmatur ein ebenes Verbindungselement (15) umfasst, welches in einer Randzone der Behälterwand in Abstand zur Trägerwand angeordnet ist, um die wärmeisolierende Barriere (5) zwischen dem ebenen Verbindungselement und der Trägerwand durchzulassen, wobei der Bfechstreifen (12) eine längslaufende Endkante (13) umfasst, welche mit dem Verbindungselement in der Randzone der Behälterwand verschweißt ist, wobei der zweite Längsabschnitt des Blechstreifens einen Randabschnitt (12) umfasst, welcher sich zwischen der längslaufenden Endkante (13) und einem Ende der Schweißflansch (9) ausdehnt, wobei die Oberkante (17) des erhöhten Seitenrandes (16) in dem Randabschnitt des Blechstreifens (12) schrittweise ab dem Endbereich des Längsendpunktes bis zur nominellen Höhe (32, 43) der zweiten Längsabschnittes ansteigt.

15. Schiff (70) zum Transport einer kalten Flüssigkeit, wobei das Schiff eine Doppelhülle (72) und einen in der Doppelhülle angeordneten Tank (71) gemäß einem der Ansprüche 9 bis 14 umfasst.

16. Verwendung eines Schiffes (70) gemäß Anspruch 15, wobei eine kalte Flüssigkeit durch isolierte Rohrleitungen (73, 79, 76, 81) von oder zu einer schwimmenden oder erdverbundenen Lageranlage (77) zu oder von dem Tank des Schiffes (71) befördert wird, um die Beladung oder Entladung des Schiffes (70) durchzuführen.

17. Transfersystem für eine kalte Flüssigkeit, wobei das System ein Schiff (70) gemäß Anspruch 15 umfasst, wobei die isolierten Rohrleitungen (73, 79, 76, 81) so angeordnet sind, dass sie den in der Schiffshülle angeordneten Tank (71) mit einer schwimmenden oder erdverbundenen Lageranlage (77) verbinden, sowie eine Pumpe, die einen Strom der kalten Flüssigkeit durch die isolierten Rohrleitungen von oder zu der schwimmenden oder erdverbundenen Speicheranlage zu oder von dem Tank des Schiffes leitet.

## Claims

1. Method of creating a watertightness barrier (6) for a wall of a watertight and thermally insulating tank, comprising:
arranging, on a thermally insulating barrier (5) that has a flat support surface for the watertightness barrier, a repeating structure comprising alternately strips of sheet metal (8) and elongate welding flanges (9) connected to the support surface and projecting with respect to the latter so that the welding flanges (9) run parallel to the strips of sheet metal (8) over at least part of the length of the strips of sheet metal and so that lateral edges (20) of the strips of sheet metal which are turned up with respect to the support surface are positioned against the adjacent welding flanges,
for respectively a first and a second adjacent strip of sheet metal arranged on either side of a welding flange, watertightly welding the turned-up lateral edge (20) of the strip of sheet metal to the welding flange using a straight welded seam (26) parallel to the support surface along a first longitudinal portion (27) of the strip of sheet metal, the straight welded seam (26) being each time arranged beneath an upper ridge (32, 41, 43) of the turned-up lateral edge of the respective strip of sheet metal,
**characterized by** the steps of:
continuing each time the straight welded seam with an end portion (28, 29) of the welded seam which is deviated with respect to the support surface in the direction of the upper edge corner (32, 41, 43) of the turned-up lateral edge and which meets the upper edge corner (32, 41, 43) of the turned-up lateral edge, and
producing a watertight edge corner welded seam (31) between the upper edge corner of the turned-up lateral edge (20) of the first strip of sheet metal and the upper edge corner of the turned-up lateral edge (20) of the second adjacent strip of sheet metal along a second longitudinal portion of the two strips of sheet metal so that the edge corner welded seam (31) watertightly meets the end portion (28, 29) of the respective welded seam (26) of each of the two strips of sheet metal.

2. Method according to Claim 1, in which the straight welded seam is produced using a welding machine moving along resting on the two adjacent strips of sheet metal (8) along the turned-up lateral edges (20), the welding machine having rotary electrode wheels and drive rolls capable of gripping the turned-up lateral edges (20), the drive rolls having their axes inclined towards the front of the machine in its direction of travel with respect to the direction perpendicular to the strips of sheet metal.

3. Method according to Claim 2, in which the end portion of the welded seam is produced by deviating the path of the welding machine in the direction of the upper edge corner (32, 41, 43) of the turned-up lateral edges.

4. Method according to Claim 3, in which the welding machine is run along an inclined plane (40) positioned on the strips of sheet metal in order to deviate its path in the direction of the upper edge corner of the turned-up lateral edges.

5. Method according to one of Claims 2 to 4, in which a protective plate (37, 38) is positioned above the upper edge corner of the turned-up lateral edges in order to maintain a spacing between electrodes of the welding machine when the said electrodes reach the upper edge corner at the end portion of the welded seam.

6. Method according to one of Claims 1 to 4, in which the end portion (28, 29) of the welded seam is stopped below the upper edge corner (32) of the turned-up lateral edges, then an upper portion (41, 43) of the turned-up lateral edges which is situated above the uppermost part of the welded seam is eliminated.

7. Method according to Claim 6, in which the upper portion of the turned-up lateral edges is eliminated by a local cut (41) in the strip of sheet metal so that the uppermost part of the welded seam lies substantially at the bottom of the local cut.

8. Method according to one of Claims 1 to 4, in which the end portion of the welded seam is produced before a longitudinal end (11) of the welding flange (9), and in which an upper portion (25, 33) of the welding flange that extends beyond the upper edge corner (32) of the turned-up lateral edges is eliminated after the end portion (28, 29) of the welded seam has been produced, the upper portion (25, 33) of the welding flange being eliminated over a length lying between the end portion (28, 29) of the welded seam and the longitudinal end (11) of the welding flange.

9. Watertight and thermally insulating tank arranged inside a bearing structure comprising a bearing wall (1), the tank comprising a tank wall positioned along the bearing wall, the tank wall comprising a watertightness barrier (6) and a thermally insulating barrier (5) positioned between the watertightness barrier and the bearing wall, the thermally insulating barrier having a flat support surface for the watertightness barrier,
the watertightness barrier (6) having a repeated structure comprising alternately strips of sheet metal (8) arranged on the support surface and elongate welding flanges (9) connected to the support surface, projecting with respect to the latter and running parallel to the strips of sheet metal over at least part of the length of the strips of sheet metal, the strips of sheet metal comprising lateral edges (20) which are turned up with respect to the support surface, arranged against the adjacent welding flanges,
each of the two strips of sheet metal arranged on either side of a welding flange comprising a first longitudinal portion in which the turned-up lateral edge (20) of the respective strip of sheet metal is watertightly welded to the welding flange (9) by a straight welded seam (26, 27) parallel to the support surface, the straight welded seam (26) being each time arranged beneath an upper ridge (32, 41, 43) of the turned-up lateral edge of the respective strip of sheet metal,
**characterized in that** each of the two strips of sheet metal arranged in either side of a welding flange furthermore comprises:
a second longitudinal portion in which the turned-up lateral edge (20) is watertightly welded to the turned-up lateral edge (20) of the other adjacent strip of sheet metal by an edge corner weld (31), and
an intermediate portion in which the edge corner weld (31) of the second portion and the straight welded seam (26, 27) of the first portion are connected watertightly, the welded seam each time having an end portion (28, 29) which is deviated with respect to the support surface in the direction of the upper edge corner (32, 41, 43) and meeting the upper edge corner (32, 41, 43) of the turned-up edge (20) in the intermediate portion of the respective strip of sheet metal, the edge corner weld (31) being continued in the intermediate portion of each of the two strips of sheet metal in such a way as to create a watertight joint with the end portion (28, 29) of the respective welded seam of each of the two strips of sheet metal.

10. Tank according to Claim 9, in which the upper edge corner (32, 43) of the turned-up lateral edge (20) of the strip of sheet metal is straight and parallel to the support surface in the intermediate portion of the strip of sheet metal.

11. Tank according to Claim 9 or 10, in which a nominal height (32) of the turned-up lateral edge (20) in the second longitudinal portion is equal to a height of the turned-up lateral edge (20) in the first longitudinal portion.

12. Tank according to Claim 9 or 10, in which the nominal height (43) of the turned-up lateral edge (20) in the second longitudinal portion is less than the height of the turned-up lateral edge (20) in the first portion.

13. Tank according to Claim 9, in which the turned-up lateral edge has a cut (41) in the intermediate portion of the strip of sheet metal in order to lower the upper edge corner of the turned-up edge, the edge corner weld meeting the deviated end portion of the welded seam at the bottom (42) of the cut.

14. Tank according to one of Claims 9 to 13, in which the tank further comprises a retaining reinforcement (15) positioned along one edge of the bearing wall (1) and connected to the bearing structure in order to react tensile load, the retaining reinforcement comprising a flat connecting element (15) arranged in a border region of the wall of the tank some distance from the bearing wall in order to allow the thermally insulating barrier (5) to pass between the flat connecting element and the bearing wall (1), the strip of sheet metal (12) comprising a longitudinal end edge (13) welded to the connecting element in the border region (10) of the wall of the tank, the second longitudinal portion of the strip of sheet metal comprising a border portion (12) extending between the longitudinal end edge (13) and one end of the welding flange (9), the upper edge corner (17) of the turned-up lateral edge (16) in the border portion of the strip of sheet metal (12) rising up progressively from the longitudinal end edge up to a nominal height (32, 43) of the second longitudinal portion.

15. Ship (70) for transporting a cold liquid product, the ship having a double hull (72) and a tank (71) according to any one of Claims 9 to 14 arranged in the double hull.

16. Use of a ship (70) according to Claim 15, in which use a cold liquid product is carried through insulated pipes (73, 79, 76, 81) from or to a floating or shore-based storage installation (77) to or from the ship's tank (71) in order to load or offload the strip (70).

17. System for transferring a cold liquid product, the system comprising a ship (70) according to Claim 15, insulated pipes (73, 79, 76, 81) arranged in such a way as to connect the tank (71) installed in the hull of the ship to a floating or shore-based storage installation (77), and a pump for driving a flow of cold liquid product through the insulated pipes from or to the floating or shore-based storage installation to or from the ship's tank.
